# EUROPÄISCHE PATENTANMELDUNG

(11) **EP 2 657 058 A2**
(43) Veröffentlichungstag der Anmeldung: **30.10.2013**
(21) Anmeldenummer: 13002166.0
(22) Anmeldetag: 24.04.2013
(51) Int. Cl.: B60K 6/46, B60K 5/08, B60W 10/30, B60K 6/30, B60K 6/32

(54) **Nutzfahrzeug**

(30) Priorität: 26.04.2012 DE 202012004203 U; 09.05.2012 DE 202012004613 U
(71) Anmelder: FAUN Umwelttechnik GmbH & Co. KG, 27711 Osterholz-Scharmbeck (DE)
(72) Erfinder: Kirchhoff, F. Johannes Dr., 58636 Iserlohn (DE); Sandkühler, Georg, 27711 Osterholz-Scharmbeck (DE)
(74) Vertreter: Laufhütte, Dieter

(57) **Zusammenfassung**

Die Erfindung betrifft ein Antriebssystem für ein Nutzfahrzeug, insbesondere ein Abfallsammelfahrzeug, bei dem wenigstens zwei Wandler von Primär- in Nutzenergie als Energiequellen vorgesehen sind, die abhängig von der Betriebsart einzeln oder gleichzeitig zuschaltbar sind, um den Leistungsbedarf zu decken.

## Beschreibung

Die vorliegende Erfindung betrifft ein Abtriebssystem für ein Nutzfahrzeug, insbesondere ein Abfallsammelfahrzeug, nach dem Oberbegriff des Anspruchs 1 sowie ein Nutzfahrzeug, insbesondere ein Abfallsammelfahrzeug mit einem Antriebssystem nach Anspruch 11.

Nutzfahrzeuge sind nach heutigem Stand der Technik immer mit einem Verbrennungsmotor ausgerüstet. Dieser Motor ist in der Regel derart ausgelegt, dass er in seinem Punkt höchster Leistung in der Lage ist, das Nutzfahrzeug bzw. das Nutzfahrzeug mit Anhänger und die gesamte Zuladung mit einer relativ hohen Geschwindigkeit auch an steilen Bergen anzutreiben. Somit ist der Motor für den großen Teil der Einsätze eines Nutzfahrzeugs vergleichsweise ziemlich groß dimensioniert.

Bei Nutzfahrzeugen und insbesondere bei Abfallsammelfahrzeugen gibt es einen sehr großen Unterschied zwischen der im Sammelbetrieb beim Fahren von Mülltonne zu Mülltonne erforderlichen Dauer-Motorleistung und derjenigen Dauer-Motorleistung, die beispielsweise zum Fahren auf der Autobahn erforderlich ist.

Wenn sich ein Abfallsammelfahrzeug im Sammelrevier befindet, ist eine Dauerleistung des Motors von ca. 40 kW vollkommen ausreichend. Dagegen muss die Motorleistung ca. 150 kW betragen, wenn sich das Abfallsammelfahrzeug auf der Autobahn befindet. Aufgrund der Auslegung auf einen optimalen betriebspunkt bei hoher Leistung arbeitet der Motor im Sammelbetrieb bei kleiner Leistung ziemlich ineffizient. Daher fallen im Sammelbetrieb der Kraftstoffverbrauch sowie die ausgestoßenen CO₂- und NOₓ- Emissionen ziemlich hoch aus.

Somit erscheint ein einziger Verbrennungsmotor nicht geeignet, die für den jeweiligen Betrieb des Abfallsammelfahrzeugs notwendige Motorleistung bereitzustellen und dabei ein möglichst abgasarmes Konzept anzubieten.

Aufgabe der vorliegenden Erfindung ist es daher, ein Antriebssystem für ein Nutzfahrzeug der eingangs genannten Art bereitzustellen sowie ein Nutzfahrzeug, insbesondere ein Abfallsammelfahrzeug mit einem solchen Antriebssystem bereitzustellen, durch welches auf eine einfache Weise eine optimierte, dem aktuellen Betriebszustand entsprechende Dauer-Motorleistung bereitgestellt werden kann, wobei der Kraftstoffverbrauch sowie die Schadstoffemissionen wesentlich reduziert werden können.

Diese Aufgabe wird erfindungsgemäß durch ein Antriebssystem für ein Nutzfahrzeug, insbesondere für ein Abfallsammelfahrzeug, mit den Merkmalen des Anspruchs 1, sowie durch ein Nutzfahrzeug, insbesondere ein Abfallsammelfahrzeug, mit den Merkmalen des Anspruchs 11 gelöst.

Das erfindungsgemäße Antriebssystem weist wenigstens zwei Wandler von Primär- in Nutzenergie als Energiequellen auf, welche abhängig von der Betriebsart einzeln oder gleichzeitig zugeschaltet werden können, um den Leistungsbedarf dann zu decken, wenn dieser von einem der Aggregate allein nicht mehr effizient gedeckt werden kann.

Somit wird ein optimierter Betrieb der eingesetzten Energiewandler in Abhängigkeit von dem jeweiligen Einsatz des Nutzfahrzeugs geschaffen, so dass sowohl der Kraftstoffverbrauch als auch die Schadstoffemissionen soweit wie möglich auf eine einfache und kostengünstige Weise minimiert werden können.

Vorzugsweise weist das erfindungsgemäße Antriebssystem eine Vorrichtung zur Energiebündelung auf, die einerseits mit den wenigstens zwei Energiequellen verbunden ist. Diese Vorrichtung steht andererseits mit wenigstens einer der Antriebsachsen des Nutzfahrzeugs in Verbindung, zum Antreiben dieser. Bei Abfallsammelfahrzeugen ist die Antriebsachse in der Regel seine Hinterachse.

Durch diese bevorzugte Ausführung mit elektrischer Leistungsaddition können die Energiequellen, insbesondere die Verbrennungsmaschinen frei im Nutzfahrzeug positioniert werden, so dass eine Anpassung der Schwerpunktslage an die jeweiligen Einsatzerfordernisse möglich ist. Abhängig von der Einsatzart können sehr weit vorne positionierte Energiequellen eine besonders bevorzugte Ausführung darstellen.

Es wird als besonders bevorzugt angesehen, wenn die Vorrichtung zur Energiebündelung ein Gleichspannungszwischenkreis ist. Hierzu wird von den Energiequellen die Energie in Gleichspannung umgewandelt und vom Gleichspannungszwischenkreis in Form von Gleichspannung an die Verbraucher weitergegeben.

Die Vorrichtung zur Energiebündelung kann vorteilhaft zusätzlich mit Komponenten zur Speicherung von Energie, wie beispielsweise Schwungmassenspeichern oder SuperCap-Systemen in Verbindung stehen.

Andererseits kann die Vorrichtung zur Energiebündelung zusätzlich auch mit Nebenverbrauchern in Verbindung stehen. Weiterhin bevorzugt ist es, wenn die Vorrichtung zur Energiebündelung eine Leistungssummierung der Energiequellen, insbesondere der Verbrennungsmaschinen, hydraulisch über angeflanschten Pumpe-Motor-Kombinationen oder mechanisch über ein Summiergetriebe oder auch einen gemeinsamen elektrischen Zwischenkreis realisieren kann.

Vorzugsweise ist das erfindungsgemäße Antriebssystem derart ausgebildet, dass die wenigstens zwei Energiequellen kaskadenartig zugeschaltet werden können, wenn der Leistungsbedarf von einem Aggregat nicht mehr effizient gedeckt werden kann. Dabei kann eines der Aggregate eine Dauerleistung von ca. 40 kW erzeugen, die im Falles eines Abfallsammelfahrzeugs, welches im Sammelbetrieb arbeitet, vollkommen ausreichend ist. Sobald sich aber das Fahrzeug beispielsweise auf der Autobahn befindet, muss eine Dauerleistung von 150 kW zur Verfügung gestellt werden, was durch das Zuschalten der weiteren Aggregate und durch die anschließende Summierung der Leistung in der Vorrichtung zur Energiebündelung realisiert werden kann.

Eine besonders bevorzugte Ausführungsform sieht vor, als Energiequellen wenigstens zwei Verbrennungsmotoren vorzusehen. Diese können vorzugsweise zwei Dieselmotoren mit Generatoren sein, die jeweils eine Dauerleistung von 75 kW erzeugen können. Ist dabei eine hohe Dauerleistung nicht erforderlich, kann einer der beiden Dieselmotor-/Generator-Kombinationen ausgeschaltet werden.

Eine weitere bevorzugte Ausführungsform der Erfindung sieht vor, dass auch mehr als zwei kleine Dieselmotoren vorgesehen sein können, wobei im Sammelbetrieb immer der Motor arbeitet, der aktuell die geringere Betriebsstundenzahl aufweist. Es ist zu bemerken, dass die Kombination aus zwei oder mehr kleinen Dieselmotoren mit angetriebener elektrischer Achse aufgrund der räumlich freien Anordenbarkeit wesentlich leichter zu realisieren ist, als eine Antriebseinheit aus LKW-Dieselmotor, Getriebe und mechanisch angetriebener Hinterachse.

Als Quellen für elektrische Energie kann vorzugsweise auch ein Brennstoffzellensystem mit wenigstens zwei Wasserstoff-Brennstoffzellen oder auch in Kombination mit einem oder mehreren kleineren Dieselmotoren verwendet werden. Die Wasserstoff-Brennstoffzellen können dabei die notwendige elektrische Energie für den Ladebetrieb liefern, wobei die kleineren Dieselmotoren nur noch zum Fahren auf längeren Strecken benötigt werden, wobei Ihre Leistung summiert wird. Die mehrere kleinere Dieselmotoren werden dabei während des Ladevorgangs über eine Start-Stopp-Automatik abgeschaltet. Dies führt zu einer Reduzierung des Dieselverbrauchs und demzufolge zur Reduktion der schädlichen CO₂ - und NOₓ - Emissionen.

Es wird als besonders bevorzugt angesehen, wenn die Komponenten der Bordstromversorgung in ein kompaktes Aggregat, in dem sich neben dem Brennstoffzellensystem auch die Wasserstoffstanks sowie die für den Betrieb notwendigen Zu- und Abluftsysteme befinden, integriert werden.

Zum Abfangen von Lastspitzen können vorzugsweise zusätzliche Ultrakondensatoren bzw. Superkondensatoren, die sogenannten "UltraCaps" bzw. "Super-Caps" verwendet werden, die als Energiepuffer dienen und die Lebensdauer einer ebenfalls als Energiequelle nutzbaren Batterie erheblich verlängern können.

Eine weitere Möglichkeit zur für einen Energiespeicher bzw. Energiepuffer stellen Schwungmassenspeicher dar.

Es ist durchaus möglich und besonders bevorzugt, die Brennstoffzellen nicht nur zur Versorgung des Nutzfahrzeugs mit elektrischem Strom zu verwenden, sondern auch das Nutzfahrzeug ganz mit einem Brennstoffzellen-Antrieb auszurüsten. Dabei kann ein einzelner Brennstoffzellen-Stack eine elektrische Leistung von 75 kW liefern. Somit kann eine Dauerleistung von 150 kW mit nur zwei Brennstoffzellen-Stacks erzielt werden. Es können aber auch Batterien verwendet werden. Wichtig ist dabei, dass die von den einzelnen Energiequellen gelieferte Gesamt-Motorleistung ca. 150 kW für den Fall eines beispielhaften Abfallsammelfahrzeugs, deutlich darüber hinaus aber z.B. für einen Transportzug mit 40t zulässigem Gesamtgewicht beträgt.

Die vorliegende Erfindung betrifft des Weiteren ein Nutzfahrzeug, insbesondere ein Abfallsammelfahrzeug, der bekannterweise im Normalbetrieb, d.h. beim Fahren beispielsweise auf der Autobahn und im Sammelbetrieb einen sehr großen Unterschied in seiner Dauer-Motorleistung aufweist, und mit dem erfindungsgemäßen Antriebssystem ausgerüstet ist.

Die vorliegende Erfindung wird nun anhand eines Ausführungsbeispiels und der Zeichnung näher erläutert. Es zeigen:
- Figur 1:: eine vereinfachte schematische Darstellung eines Nutzfahrzeugs mit einem erfindungsgemäßen Antriebssystem,
- Figur 2:: ein vereinfachtes schematisches Blockschaltbild eines erfindungsgemäßen Antriebssystems gemäß einem Ausführungsbeispiel und
- Figur 3:: ein weiteres vereinfachtes schematisches Blockschaltbild einer anderen Ausführungsform eines erfindungsgemäßen Antriebssystems.

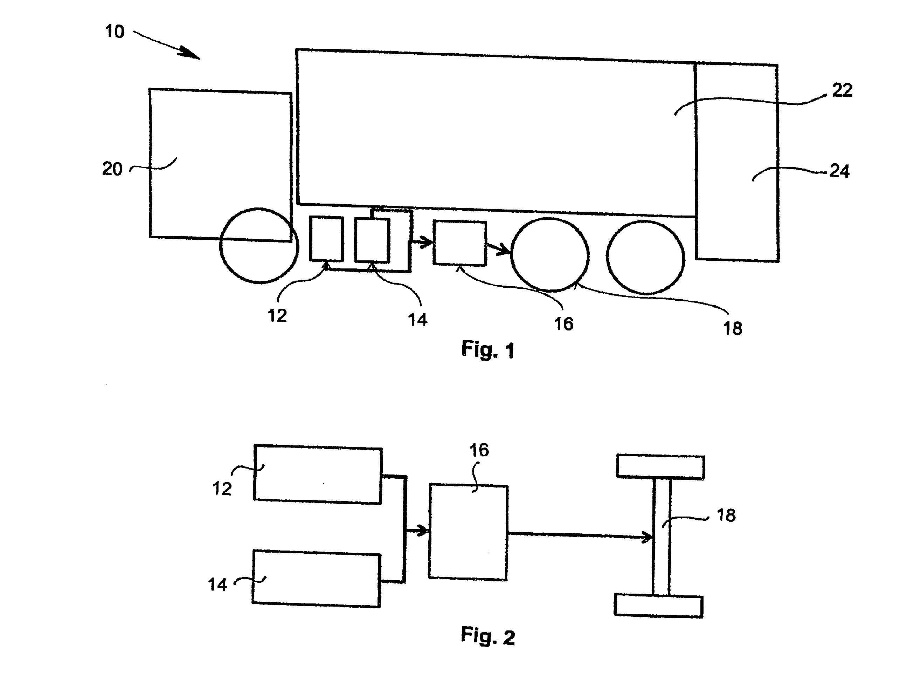

In Figur 1 ist eine vereinfachte schematische Darstellung eines Abfallsammelfahrzeugs 10 mit dem erfindungsgemäßen Antriebssystem schematisch dargestellt. Das Abfallsammelfahrzeug 10 weist in an sich bekannter Weise ein Fahrzeugchassis, eine Fahrerkabine 20, einen Aufnahmeraum 22 sowie eine heckseitige Schüttung 24 auf, wobei das Antriebssystem zwischen der Vorderachse und der Hinterachse, welche die Antriebsachse 18 ist, angebracht ist.

Es sind in diesem Ausführungsbeispiel nur zwei Energiequellen 12, 14 vorgesehen, die kaskadenartig angeordnet sind. Es versteht sich, dass das erfindungsgemäße Antriebssystem mit mehreren kleineren Energiequellen ausgerüstet werden kann, die kaskadenartig oder aber auch nebeneinander angeordnet werden können.

Eine besonders bevorzugte Ausführungsform sieht vor, als Energiequellen 12, 14 zwei Verbrennungsmotor-/Generatorkombinationen zu verwenden. Diese können eine Dauerleistung von je 75 kW erzeugen. Ihren Punkt optimalen Wirkungsgrades haben diese Verbrennungsmotor-/Generatorkombinationen vorzugsweise bei der für den Abfallsammelbetrieb erforderlichen Dauerleistung von z.B. 40 kW.

Beide Energiequellen 12, 14 stehen, wie in der vereinfachten schematischen Darstellung gemäß Figur 2 verdeutlich wird, mit einer nachgeschalteten Vorrichtung 16 zur Bündelung der erzeugten elektrischen Energie in Verbindung, so dass die Antriebsachse 18 elektrisch angetrieben wird.

Die Vorrichtung zur Energiebündelung 16 kann eine Leistungssummierung der Energiequellen 12, 14 hydraulisch über Pumpe-Motor-Kombinationen oder aber auch mechanisch über ein Summiergetriebe herbeiführen.

Als Energiequellen 12, 14 können anstatt den bekannten Dieselmotoren mit Generatoren als Quelle für elektrische Energie Wasserstoff-Brennstoffzellen oder aber auch Batterien erfolgreich verwendet werden. Es ist auch eine Kombination dieser an sich bekannten Energiequellen möglich und realisierbar. Die Brennstoffzellen können den Strom unmittelbar dann erzeugen, wenn er gebraucht wird. Somit wird eine nachhaltige Mobilität gesichert, die unabhängig vom Rohöl und umweltverträglich ist.

Durch die Bündelung der erzeugten elektrischen Energie wird erreicht, dass sowohl für den Sammelbetrieb als auch für den Normalbetrieb des Nutzfahrzeugs und insbesondere des Abfallsammelfahrzeugs eine optimierte Dauer-Motorleistung realisierbar ist. Die mehreren Motoren können über weite Bereiche des Einsatzspektrums in einem optimalen Betriebpunkt betrieben werden, so dass der Kraftstoffverbrauch dieser und die CO₂ - Emissionen deutlich vermindert werden können.

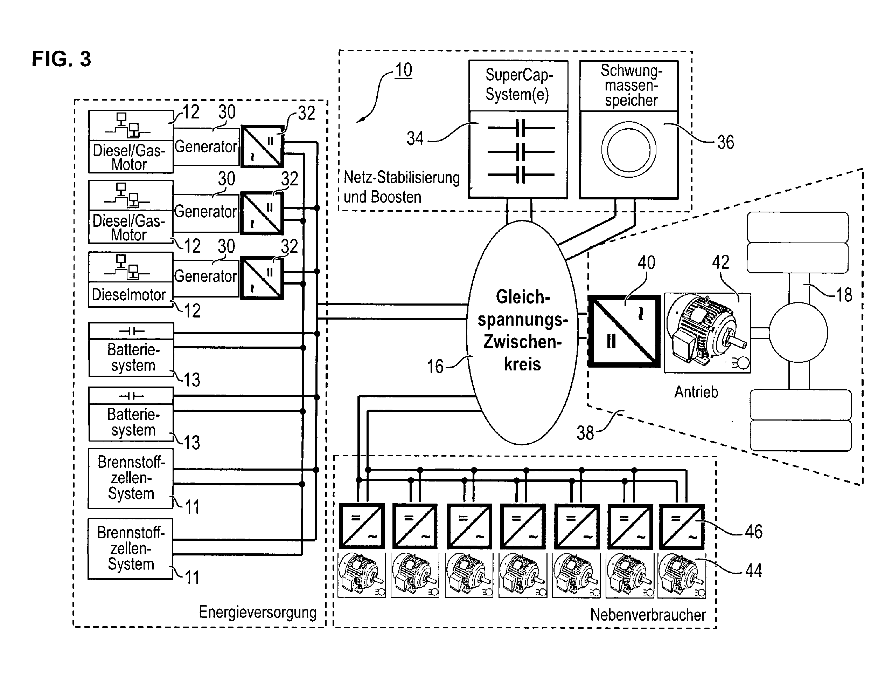

Eine weitere Ausführungsvariante der Erfindung ist in der Figur 3 dargestellt. Hier ist wiederum ein erfindungsgemäßes Antriebssystem eines Abfallsammelfahrzeugs 10 dargestellt, das dem schematischen Aufbau entsprechend Figur 1 weitgehend entspricht. In der Ausführungsform der Figur 3 besteht die gesamte Energieversorgung allerdings aus drei Verbrennungsmotoren 12, zwei Brennstoffzellensystemen 11 und zwei Batteriesystemen 13. Die Verbrennungsmotoren 12, die teilweise auch als Gasmotoren ausgestalten sein können, weisen jeweils Generatoren 30 und Gleichrichter 32 zur Umwandlung des erzeugten Wechselstroms in Gleichstrom auf. Wie in der Figur 3 dargestellt, können die Verbrennungsmotoren 12 jeweils mit den Batteriesystemen verbunden sein. Auch die Brennstoffzellensysteme 11 können mit dem Batteriesystem verbunden sein.

Aus der Energieversorgung, d.h. unmittelbar aus den Verbrennungsmotoren 12, dem Batteriesystem 13 und/oder den Brennstoffzellensystemen 11 wird die Energie einem Gleichspannungszwischenkreis 16 zugeleitet. Dieser Gleichspannungszwischenkreis stellt die Vorrichtung zur Energiebündelung dar, die zur Netzstabilisierung bzw. zu einem entsprechendem momentanen Verstärken der Leistung (Boosten) auch über entsprechende SuperCap-Systeme 34 und/oder Schwungmassenspeicher 36 mit Energie versorgt werden können. In der hier dargestellten Netzstabilisierung bzw. Booststation sind beispielhaft SuperCap-Systeme und Schwungmassenspeicher dargestellt. Selbstverständlich können im Rahmen der Erfindung nur einzelne dieser Systeme bzw. Speicher vorgesehen sein. Mit dem Gleichspannungszwischenkreis sind verschiedene Verbraucher verbunden. Zunächst ist der Fahrantrieb 38 mit dem Gleichspannungszwischenkreis verbunden, wobei hier über einen Spannungswandler 40 die Gleichspannung in Wechselspannung gewandelt wird, sodass hier entsprechende Wechselstrommotoren 42 zum Antrieb der Antriebsachse 18 versorgt werden können.

Gleichzeitig sind Nebenverbraucher 44 über den Gleichspannungszwischenkreis 16 mit Energie versorgbar, wobei hier ebenfalls über entsprechende Spannungswandler 46, die Gleichspannung in Wechselspannung zur Versorgung der Elektromotoren 44 umgewandelt wird. Typische Nebenverbraucher bei Abfallsammelfahrzeugen sind die Antriebe für die jeweiligen Abfallsammelfunktionen, beispielsweise eventuell vorhandene Pressenantriebe, Antriebe für die Abfallsammelbehälterhebevorrichtungen und dergleichen.

Aus der Beschreibung der anhand der Figur 3 dargestellten Ausführungsform wird deutlich, dass mehrere Funktionsebenen bzw. -bereiche verwirklicht sind, die jeweils unterschiedlich bestückt sein können. Die Funktionsbereiche sind auch nicht immer alle erforderlich. Grundsätzlich wäre es also auch möglich, dass es gar keine Nebenverbraucher gibt. Der hier als Fahrantrieb angesprochene Bereich könnte auch als Hubantrieb beispielsweise eines Straddle-Carriers ausgebildet sein.

Innerhalb der Funktionsbereiche sind Kombinationen aus mehreren, auch unterschiedlichen Modulen möglich. So kann beispielsweise eine Kombination mehrerer Verbrennungsmotoren mit einer Batterie oder mehreren Batterien, mit einer Brennstoffzelle oder auch mit mehreren Brennstoffzellen oder auch nur mit einem der Elemente Batterie bzw. Brennstoffzelle kombiniert werden.

Bei dem in Figur 3 dargestellten System ist allerdings die konsequente Unterscheidung in Elemente, die die Dauerleistung zur Verfügung stellen, die also zur Energieversorgung dienen, wie beispielsweise die Dieselmotoren, das Brennstoffzellen-System und das Batteriesystem einerseits und der anderen Elemente, die für eine kurzzeitige Leistungserhöhung und die Rekuperation zuständig sind, wie die SuperCap-Systeme und Schwungmassenspeicher andererseits wesentlich.

## Patentansprüche

1. Antriebssystem für ein Nutzfahrzeug, insbesondere ein Abfallsammelfahrzeug,
**dadurch gekennzeichnet, dass** wenigstens zwei Wandler von Primär- in Nutzenergie als Energiequellen (12, 14) vorgesehen sind, die abhängig von der Betriebsart einzeln oder gleichzeitig zuschaltbar sind, um den Leistungsbedarf zu decken.

2. Antriebssystem nach Anspruch 1,
**dadurch gekennzeichnet, dass** eine Vorrichtung zur Energiebündelung (16) vorgesehen ist, die mit den wenigstens zwei Energiequellen (12, 14) sowie mit wenigstens einer Antriebsachse (18) des Nutzfahrzeugs (10) in Verbindung steht, um diese anzutreiben.

3. Antriebssystem nach Anspruch 2,
**dadurch gekennzeichnet, dass** die Vorrichtung zur Energiebündelung (16) ein Gleichspannungszwischenkreis ist.

4. Antriebssystem nach Anspruch 2 oder 3,
**dadurch gekennzeichnet, dass** die Vorrichtung zur Energiebündelung (16) zusätzlich mit Komponenten zur Speicherung von Energie, wie beispielsweise Schwungmassenspeicher, SuperCap-Systemen oder Batterien in Verbindung steht.

5. Antriebssystem nach Anspruch 2, 3 oder 4,
**dadurch gekennzeichnet, dass** die Vorrichtung zur Energiebündelung (16) zusätzlich mit Nebenverbrauchern (26) in Verbindung steht.

6. Antriebssystem nach einem der Ansprüche 1 oder 2,
**dadurch gekennzeichnet, dass** mit der Vorrichtung zur Energiebündelung (16) eine Leistungssummierung der von den Energiequellen (12, 14) erzeugten elektrischen Energie hydraulisch über eine Pumpe-Motor-Kombination oder mechanisch über ein Summiergetriebe herbeigeführt werden kann.

7. Antriebssystem nach einem der vorhergehenden Ansprüche,
**dadurch gekennzeichnet, dass** die wenigstens zwei Energiequellen (12, 14) kaskadenartig zuschaltbar sind.

8. Antriebssystem nach einem der vorhergehenden Ansprüche,
**dadurch gekennzeichnet, dass** als Energiequellen (12, 14) Verbrennungsmotoren, Brennstoffzellensysteme und/oder Batteriesysteme vorgesehen sind.

9. Antriebssystem nach einem der Ansprüche 1 bis 8,
**dadurch gekennzeichnet, dass** als Quellen für elektrische Energie wenigstens zwei Verbrennungsmotoren mit Generatoren und/oder wenigstens zwei Wasserstoff-Brennstoffzellen und/oder Batterien sowie Kombinationen dieser vorgesehen sind.

10. Antriebssystem nach einem der vorhergehenden Ansprüche,
**dadurch gekennzeichnet, dass** die von den einzelnen Energiequellen gelieferte Gesamt-Motorleistung ca. 150 kW beträgt.

11. Nutzfahrzeug, insbesondere ein Abfallsammelfahrzeug, mit einem Antriebssystem nach einem der Ansprüche 1 bis 10.
